# EUROPÄISCHE PATENTSCHRIFT

(11) **EP 2 896 334 B1**
(45) Veröffentlichungstag und Bekanntmachung des Hinweises auf die Patenterteilung: **18.05.2016**
(21) Anmeldenummer: 14192962.0
(22) Anmeldetag: 13.11.2014
(51) Int. Cl.: A47K 1/02, A47B 77/06, B32B 37/12, E03C 1/32, B32B 37/18, B32B 38/00

(54) **Sanitäreinrichtung umfassend einen Waschtisch und ein Unterbaumöbel**
Sanitary device comprising a wash basin and substructure furniture
Dispositif sanitaire comprenant un lavabo et un meuble sous lavabo

(30) Priorität: 21.01.2014 DE 102014100598
(43) Veröffentlichungstag der Anmeldung: 22.07.2015
(73) Patentinhaber: Duravit Aktiengesellschaft, 78132 Hornberg (DE)
(72) Erfinder: Stammel, Thomas, 78132 Hornberg (DE); Fuhrer, Erich, 78132 Hornberg (DE); Weber, Ulrich, 77716 Haslach (DE)
(74) Vertreter: Lindner Blaumeier Patent- und Rechtsanwälte

(56) Entgegenhaltungen:
- DE-U1- 9 011 981

## Beschreibung

Die Erfindung betrifft eine Sanitäreinrichtung umfassend einen Waschtisch aus Keramik oder Porzellan und ein Unterbaumöbel, das den Waschtisch trägt und zwei Seitenwände und eine Vorderwand aufweist, auf deren oberen Stirnflächen der Waschtisch randseitig aufsitzt.

Dokument DE-U-90.11.981 offenbart die Merkmale des Oberbegriffs des Anspruchs 1.

Waschtische erfreuen sich zunehmender Beliebtheit, da sie als einstückiges Bauteil neben der eigentlichen Waschschüssel auch zwei seitliche, relativ großflächige Ablagebereiche aufweisen, die, da der Waschtisch insgesamt aus Keramik oder Porzellan ist, einerseits sehr ansehnlich sind, andererseits aber auch einfach zu reinigen sind, gleichwohl aber hinreichend Fläche zur Ablage von Gegenständen bieten. Häufig werden solche Waschtische von einem Unterbaumöbel getragen, das in der Regel als Schrankmöbel ausgeführt ist und zusätzlichen Ablageraum bietet. Das Unterbaumöbel weist, neben einem Boden, eine Vorderwand und zwei Seitenwände auf, wobei die Vorderwand selbstverständlich bei Bedarf mit einer oder zwei Schwenktüren oder Ähnlichem versehen sein kann. Die Abmessung des Unterbaumöbels wird so gewählt, dass sie im Wesentlichen der Abmessung des Waschtisches entspricht. D. h., dass die Seiten- und Vorderwände im Wesentlichen randseitig am Waschtisch verlaufen, so dass dieser mit seinem Rand auf den Stirnflächen der Vorder- und Seitenwände aufsitzt. In diesem Bereich ergibt sich zwangsläufig ein relativ unsteter Übergang von der jeweiligen Wand zum Waschtisch, da der Waschtisch natürlich, da es sich um einen gebrannten Körper handelt, einerseits keine von Tisch zu Tisch stets gleichbleibenden Abmessungen aufweist, bedingt durch den sich beim Brand ergebenden Schwund. Andererseits ist der Unterbauschrank keine millimetergenaue Maßanfertigung, so dass sich im Übergangsbereich mitunter leichte Rücksprünge oder Spalten ergeben. Dies ist mitunter nicht allzu ansehnlich, ferner besteht die Gefahr, dass Wasser, das auf den Seitenbereichen des Waschtisches steht und gegebenfalls zur Seite hin abfließt, in diesen Bereich eindringen kann.

Der Erfindung liegt damit das Problem zugrunde, eine Sanitäreinrichtung bestehend aus Waschtisch und Unterbaumöbel anzugeben, die demgegenüber verbessert ist.

Zur Lösung dieses Problems ist bei einer Sanitäreinrichtung der eingangs genannten Art erfindungsgemäß vorgesehen, dass die vorderseitige und die seitlichen Stirnflächen des Waschtisches derart bearbeitet sind, dass sie bündig mit den Außenflächen der Stirnwände und der Vorderwand abschließen, und dass ein auf die Außenfläche aufgebrachtes Furnier über eine Klebeverbindung auf die Stirnflächen des Waschtischs aufgebracht ist und sich bis zur rechtwinkligen Oberkante des Waschtischs erstreckt.

Bei der erfindungsgemäßen Sanitäreinrichtung ist der Waschtisch im Bereich seiner randseitigen Stirnflächen mit einem Furnier, das die gesamte Außenfläche der jeweiligen Stirn- und Vorderwände belegt, übergriffen, so dass sich an allen Seiten eine vollständige ebene Wandfläche ergibt. Um dies zu ermöglichen ist der Waschtisch im Bereich seiner randseitigen Stirnflächen bearbeitet und auf ein definiertes Maß plangeschliffen, so dass sich ebene Stirnflächen mit oberseitigen, einen 90°-Winkel aufweisenden Kanten ergeben. Da das Kantenmaß des Waschtischs damit bekannt ist, kann folglich auch ein dementsprechend bemessenes Unterbaumöbel aufgebaut werden, derart, dass die Außenflächen der Seitenwände und der Vorderwand, die aus einem entsprechenden Holzkorpus bestehen, bündig mit diesen planen Stirnflächen des Waschtischs abschließen. Alternativ kann bei bekanntem Maß des Unterbaumöbels der Waschtisch entsprechend maßgenau bearbeitet werden. Auf den Außenflächen der Seitenwände und der Vorderwand ist ein Furnier aufgebracht, bei dem es sich um ein Echtholzfurnier, ein Dekorfurnier oder ein Schichtstofffurnier handeln kann, und das die Sichtfläche des Unterbaumöbels bildet. Dieses Furnier belegt die gesamte Wandfläche und erstreckt sich, da ein vollkommen ebener Übergang von der Wandfläche zur jeweiligen Stirnfläche des Waschtisches gegeben ist, auch ebenflächig über die jeweilige angrenzende Waschtischstirnfläche, mit der es über eine entsprechende Klebeverbindung fest verklebt ist. Das Furnier erstreckt sich bis exakt an die rechtwinklige Oberkante des Waschtischs, schließt mit dieser also bündig ab. Die Klebeverbindung stellt eine dichte Verbindung sicher, die ein Eindringen von Wasser in diesen Bereich ausschließt.

Damit ergibt sich eine Sanitäreinrichtung, die allseitig mit einem Furnier, das sowohl das Unterbaumöbel als auch den Waschtisch randseitig einfasst, verkleidet ist. Die Seitenwände und die Vorderwand sind ebenflächig, es ergeben sich keinerlei Rücksprünge oder Spalte etc., wobei ein vollständig dichter Übergang vom Unterbaumöbel zum Waschtisch über das verklebte Furnier respektive die Klebeverbindung gewährleistet ist.

Zweckmäßig ist es, wenn die einander zugewandten und aufeinanderliegenden Randflächen des Waschtischs und Stirnflächen der Vorder- und Seitenwände formschlüssig aneinander anliegen. Es ist also gemäß dieser Erfindungsausgestaltung eine plane, flächige Auflage vorgesehen. Dies kann auf einfache Weise dadurch erreicht werden, dass einerseits die Stirnflächen der Vorder- und Seitenwände, die üblicherweise aus einem Holzmaterial oder einem Fasermaterial bestehen, entsprechend plan bearbeitet werden, und andererseits, indem auch die Unterseite des Waschtischs im Randbereich entsprechend geschliffen wird, sofern sie nicht plan genug ist.

Dabei sind unterschiedliche Ausgestaltungen hinsichtlich dieser formschlüssigen Anlage denkbar. Nach einer ersten Erfindungsalternative kann die eben auslaufende Unterseite des Waschtischs plan auf der jeweiligen Stirnfläche aufliegen. D. h., dass die Unterseite des Waschtischs, bezogen auf die Montagestellung, horizontal verläuft, also randseitig horizontal eben ist, was auch für die Stirnflächen der Vorder- und Seitenwände gilt.

Alternativ hierzu kann vorgesehen sein, an der Unterseite des Waschtischs im Randbereich eine Nut auszubilden, in die die jeweilige Wand eingreift. Diese nach unten und seitlich offene Nut ist vorzugsweise ebenfalls rechtwinklig ausgeführt und in ihrer Breite so bemessen, dass die Stirnfläche des verbleibenden, oberen Nutsteges wiederum ebenflächig und bündig mit der Außenseite der jeweiligen Möbelwand abschließt. Die jeweilige Möbelwand, die im Querschnitt natürlich ebenfalls rechtwinklige Kanten aufweist, wird in die Nut eingesetzt und ist in dieser damit formschlüssig festgelegt.

Eine dritte Erfindungsalternative sieht vor, die Randflächen des Waschtischs und die Stirnflächen der jeweiligen Wände des Unterbaumöbels über eine Gehrung formschlüssig aneinander anzulegen. Die aneinander liegenden Flächen verlaufen folglich unter einem definierten, gleichen Winkel, so dass sich wiederum eine formschlüssige Anlage ergibt.

Im Falle der Ausbildung der waschtischseitigen Nut oder der waschtischseitigen Gehrung ergibt sich zwangsläufig aufgrund des Materialabtrags eine etwas schmälere Stirnfläche am Waschtisch. Die Nut sollte dabei so bemessen sein, dass der in die Stirnfläche auslaufende Schenkel der Nut eine Höhe ≤ 10 mm, insbesondere ≤ 5 mm und vorzugsweise von ca. 2 mm aufweist. Wird eine Gehrung vorgesehen, so sollte diese derart sein und verlaufen, dass die an die Gehrung des Waschtisches anschließende Stirnfläche eine ebenso bemessene Höhe aufweist, d. h., auch hier sollte die Höhe ≤ 10 mm, insbesondere ≤ 5 mm und vorzugweise ca. 2 mm betragen. Selbst bei einer Stirnfläche von nur ca. 2 mm Höhe ist noch eine hinreichende Verklebefläche für das Furnier gegeben.

Als Klebstoff wird bevorzugt ein Epoxidharz- oder Polyurethan (PU)-klebstoff verwendet, der einerseits eine feste Verbindung von Furnier zum Keramik- oder Porzelanwaschtisch ermöglicht. Zum anderen kann über einen solchen Epoxidharzoder PU-kleber die hinreichende Dichtigkeit erreicht werden.

Als Furnier kann, wie bereits beschrieben, ein Echtholzfurnier, ein Dekorfurnier oder ein Schichtstofffurnier verwendet werden. Hier sind letztlich von der Materialwahl her keine Grenzen gesetzt. Das bedeutet auch, dass damit eine sehr große Bandbreite an Farben und Mustern des verwendbaren Furniers, das die Sichtfläche bildet, gegeben ist.

Neben der Sanitäreinrichtung betrifft die Erfindung ferner ein Verfahren zur Herstellung einer Sanitäreinrichtung der vorbeschriebenen Art. Dieses Verfahren zeichnet sich dadurch aus, dass an den Seitenwänden und der Vorderwand ein über die jeweilige Stirnfläche hinausstehender Furnierabschnitt vorgesehen wird, wonach die Stirnfläche des Waschtischs in Abhängigkeit des Abstands der Furnierabschnitte voneinander bzw. zur Möbelrückseite bearbeitet wird, wonach eine Klebstoffschicht auf die Innenseite der Furnierabschnitte und/oder die Stirnflächen des Waschtisch aufgebracht wird, wonach der Waschtisch auf das Unterbaumöbel aufgesetzt wird, so dass die Furnierabschnitte gegenüber den Stirnflächen der Waschtischs liegen und über die Klebeschicht daran angeklebt werden.

Verfahrensgemäß wird also zunächst das Unterbaumöbel aufgebaut und derart bearbeitet, dass sich randseitig die entsprechenden Furnierabschnitte, die nachfolgend die eingesetzten Waschtischstirnflächen übergreifen, frei stehen. Sodann wird der Abstand der Furnierabschnitte der Seitenwände zueinander sowie der Abstand des Furnierabschnitts der Vorderwand zur Möbelrückseite exakt vermessen. Diese Abstandswerte dienen als Zielparameter hinsichtlich der Bearbeitung des Waschtischs bzw. dessen Seitenflächen. Diese werden nun so bearbeitet, dass der Abstand der Seitenflächen zueinander respektive zur Waschtischrückseite exakt den entsprechenden Abständen der Furnierabschnitte entspricht. Der derart bearbeitete Waschtisch kann sodann, nachdem der entsprechende Klebstoffauftrag erfolgt ist, quasi in den "Furnierabschnittrahmen" eingesetzt werden. Da die Abstandsmaße aufeinander abgestimmt sind, liegt folglich der Waschtisch spaltfrei innerhalb der Furnierabschnitte, die über die Klebeschicht fest am Waschtisch angeklebt sind.

Dabei kann zur Ausbildung der Furnierabschnitte die jeweilige Wand des Unterbaumöbels an der jeweiligen Stirnfläche materialabtragend, insbesondere durch Fräsen, bearbeitet werden, so dass der Furnierabschnitt freigelegt wird. Üblicherweise ist das jeweilige Wandbauteil ein vorgefertigtes Bauteil bestehend aus einem Korpus aus Holz oder Faserwerkstoff, der bereits mit dem Furnier belegt ist. Zur "Freilegung" der Furnierabschnitte wird nun das Korpusmaterial im Bereich der Stirnfläche abgetragen, was gleichzeitig dazu dient, die definierte Stirnflächenform herauszubilden, je nachdem, wie die Stirnflächen und die Waschtischunterseite formschlüssig aneinanderliegen.

Zweckmäßig ist es, die Höhe der Furnierabschnitte so zu bemessen, dass sie etwas über die Oberkante des Waschtischs hervorstehen. Erfindungsgemäß werden nun nach dem Einsetzen des Waschtischs und Verkleben der Furnierabschnitte die entsprechenden Überstände der Furnierabschnitte über die Oberkante des Waschtischs abgeschnitten, so dass sich ein oberflächenbündiger Kantenabschluss ergibt.

Je nachdem, wie der formschlüssige Übergang von Waschtisch zu Möbelwand gewählt wird, kann entweder am Waschtisch unterseitig eine randseitige Nut ausgebildet werden, in die die jeweilige Wand eingreift. Alternativ kann die Unterseite des Waschtischs auch plangefräst werden, so dass der Waschtisch und die jeweiligen Stirnflächen der Wände plan aufeinander liegen.

Nach einer dritten Alternative kann ferner am Waschtisch und der jeweiligen Möbelwand eine Gehrungsfläche, über die beide aneinander liegen, ausgebildet werden.

Als Klebstoff wird schließlich bevorzugt ein Epoxidharz- oder Polyurethankleber verwendet.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Perspektivansicht einer erfindungsgemäßen Sanitäreinrichtung,
- Fig. 2: eine Detailansicht einer Sanitäreinrichtung im Schnitt,
- Fig. 3: eine vergrößerte Teilansicht des Übergangsbereichs einer Wand zum Waschtisch mit übergezogenem Furnier,
- Fig. 4: eine Ansicht entsprechend Fig. 3 mit auf Gehrung geschnittenen Anlageflächen von Wand und Waschtisch,
- Fig. 5: eine weitere Ansicht entsprechend Fig. 3 mit einer waschtischseitig ausgebildeten Nut, in der die Wand aufgenommen ist, und
- Fig. 6 - 10: verschiedene Ansichten zur Erläuterung des Herstellungsverfahrens eines erfindungsgemäßen Sanitärgegenstandes.

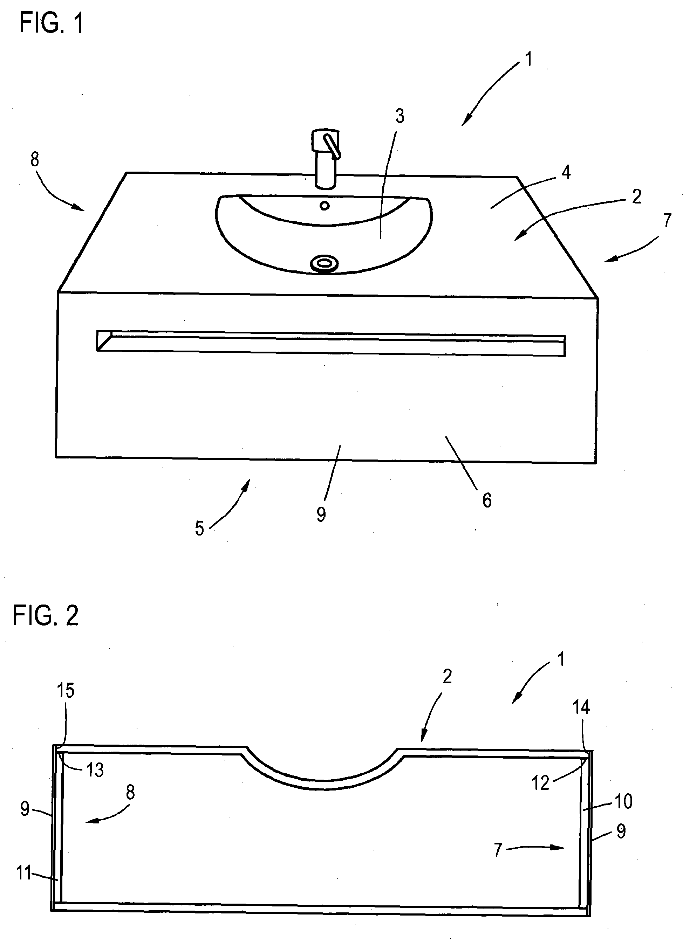

Fig. 1 zeigt eine erfindungsgemäße Sanitäreinrichtung 1 umfassend einen Waschtisch 2 aus Keramik oder Porzellan, der in an sich bekannter Weise wenigstens einen Schüsselbereich 3 sowie diesen umgebende vorder- und rückseitige sowie seitliche Ablagebereiche 4, die horizontal verlaufen bezogen auf die Montagestellung, aufweist.

Die Sanitäreinrichtung 1 umfasst des Weiteren ein Unterbaumöbel 5, wenigstens umfassend eine Vorderwand 6 sowie zwei Seitenwände 7, 8 und in der Regel einen hier nicht näher gezeigten Boden. Das Unterbaumöbel ist als fertiges Element aufgebaut, auf das der Waschtisch 2 aufgesetzt wird. Der Waschtisch 2 liegt randseitig mit seiner Unterseite auf einer entsprechenden Stirnfläche der einzelnen Wände 6, 7, 8 auf, worauf nachfolgend noch im Detail eingegangen wird.

Jede der Wände 6, 7, 8 ist mit einem Furnier 9 belegt, wobei in Fig. 1 lediglich das Furnier 9 der Vorderwand gezeigt ist. Dieses Furnier 9 belegt die jeweilige Wand komplett flächig und erstreckt sich über die jeweilige Wand hinaus, so dass auch die entsprechenden Stirnflächen der Seiten des Waschtisches 2 übergriffen sind. Das Furnier 9 erstreckt sich bis zur Oberkante des Waschtischs 2 und schließt mit dieser bündig ab, mit den Stirnflächen ist es verklebt. Hierauf wird nachfolgend noch eingegangen.

Fig. 2 zeigt eine Schnittansicht durch den Sanitärgegenstand 1 aus Fig. 1. Gezeigt sind hier die beiden Seitenwände 7, 8, die jeweils aus der eigentlichen Wandplatte 10, 11 bestehen, beispielsweise eine Holz- oder Sperrholzplatte oder eine Faserplatte. Die jeweilige Seitenwand 7, 8, gleiches gilt natürlich für die Vorderwand 6, ist außenseitig mit dem Furnier 9 belegt, bei dem es sich um ein Echtholzfurnier oder ein Dekorfurnier und Ähnliches handeln kann.

Auf den oberen Stirnflächen 12, 13 der Seitenwände 7, 8 und natürlich auch der entsprechenden Vorderwand 6, die im gezeigten Beispiel plan und horizontal verlaufen, liegt der Waschtisch 2 randseitig auf. Ersichtlich erstreckt sich das jeweilige Furnier 9 an den beiden Seitenwänden 7, 8 und an der Vorderwand 6 über die Stirnflächen 14, 15 und auch die vordere Stirnfläche des Waschtischs 2.

Um dies zu ermöglichen werden die Stirnflächen 14, 15 und die entsprechende vordere Stirnfläche des Waschtischs 2 mit einer geeigneten Schleifmaschine oder Fräsmaschine plan geschliffen, so dass sich eine exakte ebene Fläche ergibt.

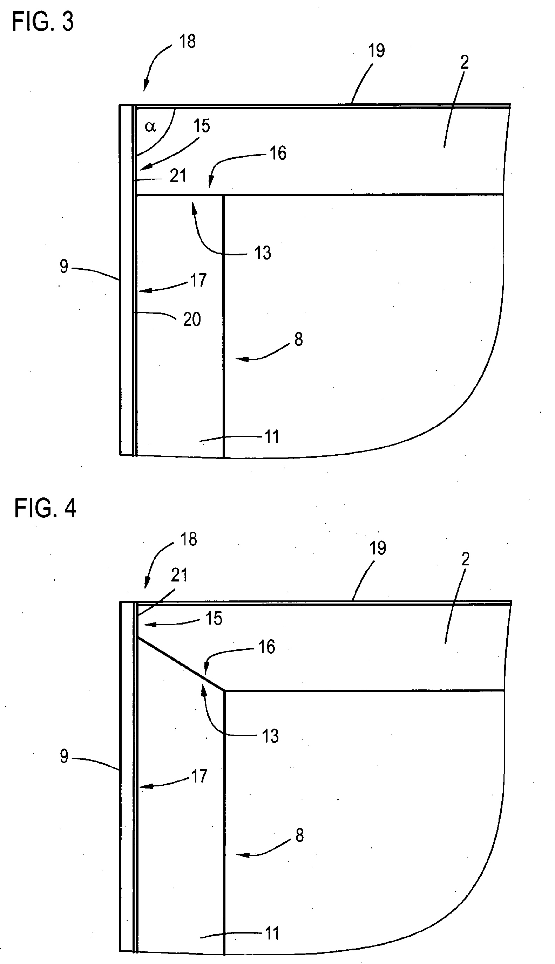

Fig. 3 zeigt ein erstes Beispiel eines Verbindungsbereichs, hier exemplarisch der Seitenwand 8 mit dem Waschtisch 2.

Gezeigt ist die Seitenwand 8 mit ihrer Wandplatte 11 und ihrer ebenfalls bevorzugt durch entsprechende Fräsbearbeitung ebenflächig ausgebildeten Stirnfläche 13. Die Unterseite 16 des Waschtischs 2 ist im Randbereich gegebenenfalls ebenfalls plan geschliffen, so dass sich eine formschlüssige vollflächige Auflage der Unterseite 16 auf der Stirnfläche 13 ergibt.

Auch die Seitenfläche 15 ist wie beschrieben plan geschliffen. Sie liegt bündig an die Außenfläche 17 der Wandplatte 11 bzw. der jeweiligen Seiten- oder Vorderwand an, so dass sich eine komplett ebene Fläche bestehend aus der Außenfläche 17 und der Stirnfläche 15 ergibt. Dies gilt über alle Übergänge einer Wand zum Waschtisch.

Durch die entsprechende Schleifbearbeitung der Stirnfläche 15 des Waschtischs 2 ergibt sich folglich eine rechtwinklige Kante 18 am Waschtisch, wie durch den Winkel α dargestellt ist. D. h., dass also auch der Übergang zu der auf dem Waschtisch 2 oberseitig vorgesehene Glasurschicht 19, die wenige zehntel Millimeter stark ist, ebenflächig ist.

Ersichtlich ist auf die Seitenwand 8, gleiches gilt natürlich auch für die anderen Wände, die Dekorschicht 9 über eine entsprechende Klebeverbindung 20 aufgebracht. Das Furnier 9 erstreckt sich nun über die eigentliche Wand hinaus und bedeckt die Stirnfläche 15, an der es über eine weitere Klebeschicht 21 angeklebt ist. Diese Klebeschicht 21 erstreckt sich bis exakt an die Kante 18, Furnier 9 und Klebeschicht 21 schließen an der Kante 18 bündig mit der Oberseite des Waschtischs 2 ab.

Da dies für sämtliche der seitlichen und vorderseitigen Stirnflächen des Waschtischs 2 gilt, ist dieser folglich an diesen Seiten mit dem Furnier 9 eingefasst. Über die Klebeverbindung 21 ergibt sich ein dichter, völlig spaltfreier Abschluss. Das Furnier 9 seinerseits bedeckt die jeweilige Wand sowie die jeweilige Stirnfläche komplett ebenflächig, so dass sich keinerlei Sprünge und Ähnliches ergeben.

Fig. 3 zeigt eine weitere Ausführungsform eines solchen Verbindungsbereichs. Während in der Ausgestaltung nach Fig. 3 die beiden Flächen 13 und 16 horizontal zueinander verlaufen, so dass sich eine 90°-Verbindung ergibt, ist bei der Ausgestaltung gemäß Fig. 4 die Stirnfläche 13 sowie die Unterseite 16 jeweils auf Gehrung geschnitten. Dies führt wiederum zu einer formschlüssigen flächigen Anlage aneinander. Jedoch ist die Stirnfläche 15 - und dies gilt wie gesagt für alle anderen Stirnflächen an der gegenüberliegenden Seitenwand sowie der Vorderwand - deutlich schmäler. Die verbleibende Höhe sollte ≤ 1 cm sein, vorzugsweise ≤ 5 mm oder etwas geringer. Sie sollte in jedem Fall so gewählt sein, dass noch hinreichend Keramik- oder Porzellanmaterial verbleibt, das die Glasur 19 trägt.

Unabhängig davon erstreckt sich auch hier das Furnier 9 über die Außenwand 8 hinaus und übergreift die Stirnfläche 15, an der es wiederum über die Klebeschicht 21 angeklebt ist. Im Bereich der Kante 18 ergibt sich auch hier ein bündiger und planer Abschluss, der über die Klebeschicht 21 vollkommen dicht ist.

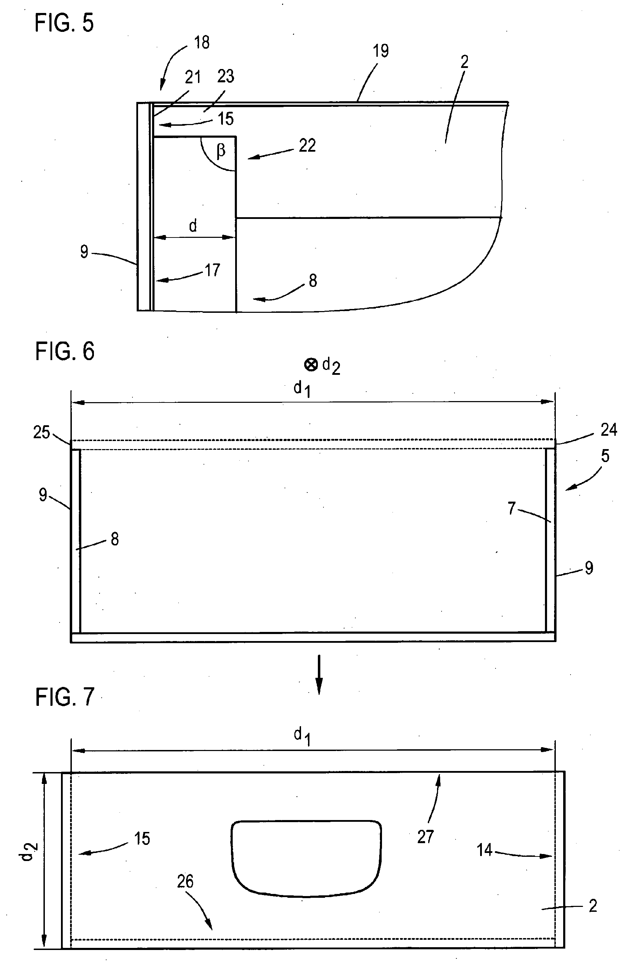

Fig. 5 zeigt eine Ausgestaltung eines solchen Verbindungsbereichs, bei dem am Waschtisch 2 randseitig eine Nut 22 ausgebildet ist, die rechtwinklig ist, also der Form des Kantenbereichs der Seitenwand 8 entspricht, wie durch den Winkel β angegeben. Die Tiefe der Nut entspricht der Dicke d der jeweiligen Wand, so dass diese vollständig in der Nut 22 aufgenommen wird. D. h., dass der verbleibende Schenkel 23, der die Nut oberseitig begrenzt, und der die Stirnfläche 15 - im Falle der anderen Wände natürlich die dortige Stirnfläche - aufweist, so bearbeitet wird, dass seine Länge letztlich exakt dem Maß d der Wand entspricht. Die Stirnfläche 15 ist auch hier komplett plan geschliffen, so dass sich wiederum ein ebenflächiger Übergang von der Außenfläche 17 zur Stirnfläche 15 ergibt. Die Dicke des Nutschenkels 23 ist so bemessen, dass sie wiederum ≤ 1 cm ist, vorzugsweise ≤ 5 mm. In jedem Fall ist sie so bemessen, dass wiederum hinreichend Keramik- oder Porzellanmaterial verbleibt, das die Glasur 19 trägt.

Ersichtlich erstreckt sich auch hier das Furnier 9 über die Außenfläche 17 der Wand sowie über die Stirnfläche 15, wo das Furnier über die Klebeschicht 21 angeklebt ist. Im Bereich der rechtwinkligen Kante 18 ergibt sich wiederum ein ebenflächiger, dichter und bündiger Abschluss.

Die Fig. 6 - 10 beschreiben exemplarisch die verschiedenen Schritte eines erfindungsgemäßen Verfahrens zur Herstellung einer erfindungsgemäßen Sanitäreinrichtung. Wie in der Prinzipdarstellung gemäß Fig. 6 an dem hier ohne Vorderwand gezeigten Unterbaumöbel 5 dargestellt ist, wird zunächst das Unterbaumöbel 5 aufgebaut. Hier sind lediglich die Seitenwände 7 und 8, auf denen bereits die entsprechenden Furniere 9 aufgebracht sind, gezeigt. Die jeweiligen Wände sind im Bereich ihrer oberen Stirnkanten bereits so bearbeitet, dass sich entsprechende freistehende Furnierabschnitte 24, 25 ergeben, entsprechend natürlich auch im Bereich der Vorderwand 6. Hierzu wird die jeweilige Wand mit einem entsprechenden Fräser oder ähnlichem Material abhebend bearbeitet, sofern nicht von Haus aus das entsprechende Furnier 9 über die jeweilige Wand hinausgezogen ist.

Ist das Unterbaumöbel 5 aufgebaut, so werden die Abstände der beiden Furnierabschnitte 24, 25 zueinander, hier der Abstand d₁, sowie der Abstand des hier nicht näher gezeigten Furnierabschnitts der Vorderwand 6 zur Rückseite des Unterbaumöbels 5, dargestellt durch das Kreuzsymbol und den Abstand d₂, exakt vermessen.

Sodann wird im nächsten Schritt, wie in Fig. 7 dargestellt, der Waschtisch 2, der hier in einer Aufsicht gezeigt ist, mit einem entsprechenden Bearbeitungswerkzeug, vorzugsweise einer Schleifmaschine, bearbeitet, so dass sich im Bereich der Seitenkanten die entsprechenden ebene Stirnflächen 14, 15 sowie im Bereich der vorderen Stirnkante die ebene Stirnfläche 26 ergibt. Die entsprechenden Stirnflächen 14, 15, 26 sind über die gestrichelten Linien dargestellt. Der Abstand der hierüber hergestellten Stirnflächen 14, 15 zueinander entspricht exakt dem Maß d₁, also dem Abstand der Furnierabschnitte 24, 25 zueinander. Der Abstand der Stirnfläche 26 zur hinteren Stirnkante 27 entspricht dem Abstandswert d₂ des nicht näher gezeigten Furnierabschnitts der Vorderwand zur hinteren Seite des Unterbaumöbels 5.

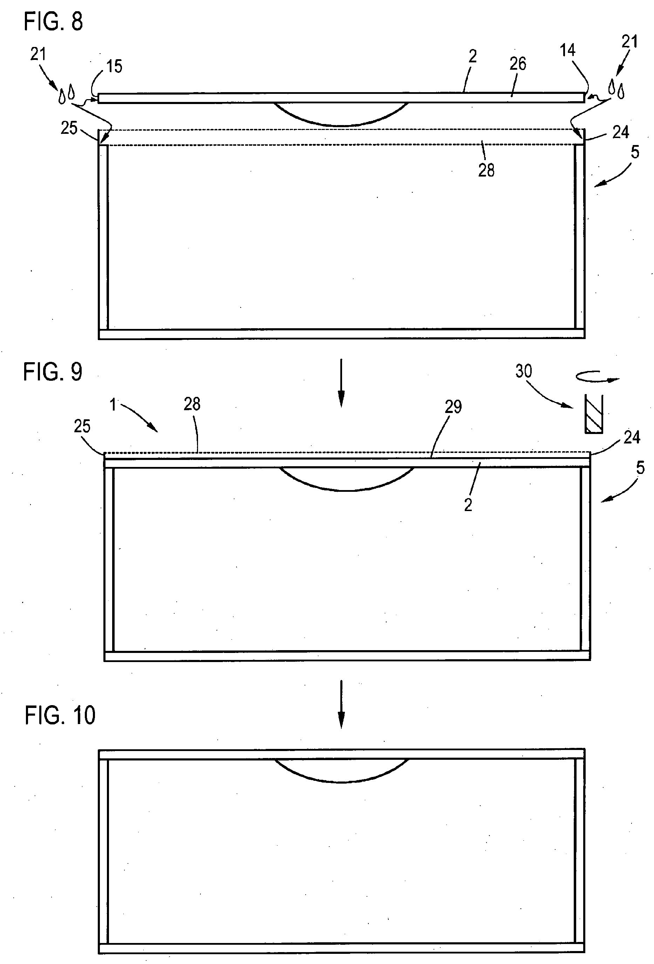

Im nächsten Schritt, siehe Fig. 8, wird der Waschtisch 2 in das Unterbaumöbel 5 "eingesetzt", d. h, er wird in den sich aus den Furnierabschnitten 24, 25 und dem hier exemplarisch gestrichelt dargestellten vorderseitigen Furnierabschnitt 28 ergebenden "Rahmen" eingesetzt. Zuvor wird, wie durch die Tropfensymbole dargestellt ist, eine Klebeschicht 21 auf die Innenseiten der Furnierabschnitte 24, 25, 28 und/oder die entsprechenden Stirnflächen 14, 15, 26 aufgetragen. Mit dem Einsetzen des Waschtischs liegt dieser auf den entsprechenden Stirnflächen der einzelnen Wände auf. Die Furnierabschnitte 24, 25, 28 sind mit den Stirnflächen 14, 15, 26 des Waschtischs 2 verklebt.

Fig. 9 zeigt die Sanitäreinrichtung 1 nach dem Einsetzen des Waschtischs 2 in das Unterbaumöbel 5. Ersichtlich stehen die Furnierabschnitte 24, 25, 28 über die Oberseite 29 des Waschtischs 2 etwas hinaus. Mit einem entsprechenden Werkzeug 30 wird nun das überstehende Furniermaterial abgeschnitten, so dass sich, wie Fig. 10 zeigt, der oberflächenbündige Randabschluss ergibt.

Die Fig. 6 - 10 beschreiben ein Herstellverfahren, bei dem zunächst das Unterbaumöbel hergestellt wird, an dem sodann die entsprechenden Maße d₁ und d₂ genommen werden, die sodann Grundlage für die Bearbeitung des Waschtischs bilden. Dies ist zweckmäßig, als es ohne Weiteres möglich ist, über eine entsprechende Schleifmaschine, die natürlich entsprechend eingestellt werden kann, den Waschtisch als einzelnes Bauteil entsprechend den genommen Maßen d₁ und d₂ zu schleifen. D. h., dass sich folglich das Schleifmaß des Waschtischs 2 nach dem Baumaß des Unterbaumöbels 5 richtet.

Grundsätzlich wäre aber auch eine umgekehrte Arbeitsweise denkbar. In diesem Fall würde zunächst der Waschtisch 2 bearbeitet werden, wobei in diesem Fall natürlich, da die Schleifmaschine entsprechend programmiert werden kann, jeder Waschtisch exakt das gleiche Maß aufweisen würde. Sodann wird nach diesem Maß das jeweilige Unterbaumöbel 5 gefertigt.

## Patentansprüche

1. Sanitäreinrichtung umfassend einen Waschtisch (2) aus Keramik oder Porzellan und ein Unterbaumöbel (5), das den Waschtisch trägt und zwei Seitenwände (7,8) und eine Vorderwand (6) aufweist, auf deren oberen Stirnflächen der Waschtisch randseitig aufsitzt, **dadurch gekennzeichnet, dass** die vorderseitige und seitlichen Stirnflächen (14, 15, 26) des Waschtischs (2) derart bearbeitet sind, dass sie bündig mit den Außenflächen (17) der Seitenwände (7, 8) und der Vorderwand (6) abschließen, und dass ein auf die Außenflächen (17) aufgebrachtes Furnier (9) über eine Klebeverbindung (21) auf die Stirnflächen (14, 15, 26) des Waschtischs (2) aufgebracht ist und sich bis zu rechtwinkligen Oberkante (18) des Waschtischs (2) erstreckt.

2. Sanitäreinrichtung nach Anspruch 1, **dadurch gekennzeichnet, dass** die einander zugewandten und aufeinander liegenden Randflächen (16) des Waschtischs (2) und die Stirnflächen (13) der Vorder- und Seitenwände (6, 7, 8) formschlüssig aneinander anliegen.

3. Sanitäreinrichtung nach Anspruch 2, **dadurch gekennzeichnet, dass** die eben auslaufende Unterseite (16) des Waschtischs (2) plan auf der jeweiligen Stirnfläche (13) aufliegt.

4. Sanitäreinrichtung nach Anspruch 2, **dadurch gekennzeichnet, dass** an der Unterseite des Waschtischs (2) eine Nut (22) ausgebildet ist, in die die jeweilige Wand (6, 7, 8) eingreift.

5. Sanitäreinrichtung nach Anspruch 2, **dadurch gekennzeichnet, dass** die Randflächen (16) des Waschtischs (2) und die Stirnflächen (13) die jeweiligen Wände (6, 7, 8) über eine Gehrung aneinander anliegen.

6. Sanitäreinrichtung nach Anspruch 4 oder 5, **dadurch gekennzeichnet, dass** der in die Stirnfläche (14, 15, 26) auslaufende Schenkel (23) der Nut (22) oder die an die Gehrung des Waschtischs (2) anschließende Stirnfläche (14, 15, 26) eine Höhe ≤ 10 mm, insbesondere ≤ 5 mm und vorzugsweise von ca. 2 mm aufweist.

7. Sanitäreinrichtung nach einem der vorangehenden Ansprüche, **dadurch gekennzeichnet, dass** der die Klebeverbindung (21) bildende Klebstoff ein Epoxidharzklebstoff oder ein Polyurethanklebstoff ist.

8. Sanitäreinrichtung nach einem der vorangehenden Ansprüche, **dadurch gekennzeichnet, dass** das Furnier (9) ein Echtholzfurnier, ein Dekorfurnier oder ein Schichtstofffurnier ist.

9. Verfahren zur Herstellung einer Sanitäreinrichtung nach einem der vorangehenden Ansprüche, **dadurch gekennzeichnet, dass** an den Seitenwänden (7, 8) und der Vorderwand (6) ein über die jeweilige Stirnfläche (13) hinausstehender Furnierabschnitt (24, 25, 28) vorgesehen wird, wonach die Stirnflächen (14, 15, 26) des Waschtischs (2) in Abhängigkeit des Abstands(d₁, d₂)der Furnierabschnitte (24, 25, 28) voneinander bzw. zur Möbelrückseite bearbeitet wird, wonach eine Klebstoffschicht (21) auf die Innenseite der Furnierabschnitte (24, 25, 28) und/oder die Stirnflächen (14, 15, 26) des Waschtischs (2) aufgebracht wird, wonach der Waschtisch (2) auf das Unterbaumöbel (5) aufgesetzt wird, so dass die Furnierabschnitte (24, 25, 28) gegenüber der Stirnflächen (14, 15, 26) des Waschtischs (2) liegen und über die Klebstoffschicht (21) daran angeklebt werden.

10. Verfahren nach Anspruch 9, **dadurch gekennzeichnet, dass** zur Ausbildung der Furnierabschnitte (24, 25, 28) die jeweilige Wand (6, 7, 8) des Unterbaumöbels (5) an der jeweiligen Stirnfläche (13) materialabtragend, insbesondere durch Fräsen, bearbeitet wird, so dass der Furnierabschnitt (24, 25, 28) freigelegt wird.

11. Verfahren nach Anspruch 9 oder 10, **dadurch gekennzeichnet, dass** nach dem Einsetzen des Waschtischs (2) und dem Verkleben der Furnierabschnitte (24, 25, 28) ein Überstand der Furnierabschnitte (24, 25, 28) über die Oberkante (18) des Waschtischs (2) abgeschnitten wird.

12. Verfahren nach einem der Ansprüche 9 - 11, **dadurch gekennzeichnet, dass** am Waschtisch (2) unterseitig eine randseitige Nut (22) ausgebildet wird, in die die jeweilige Wand (6, 7, 8) eingesetzt wird.

13. Verfahren nach einem der Ansprüche 9 - 11, **dadurch gekennzeichnet, dass** die Unterseite des Waschtischs (2) plangefräst wird.

14. Verfahren nach einem der Ansprüche 9 bis 11, **dadurch gekennzeichnet, dass** am Waschtisch (2) und der jeweiligen Wand (6, 7, 8) eine Gehrungsfläche, über die die beiden aneinander anliegen, ausgebildet wird.

15. Verfahren nach einem der Ansprüche 9 bis 14, **dadurch gekennzeichnet, dass** als die Klebeverbindung (21) bildender Klebestoff ein Epoxidharzklebstoff oder ein Polyurethanklebstoff verwendet wird.

## Claims

1. Sanitary installation comprising a washbasin (2), made of ceramic or porcelain material, and a substructure furniture unit (5), which supports the washbasin and has two side walls (7, 8) and a front wall (6), the washbasin being seated along the periphery of the upper end surfaces thereof, **characterized in that** the front and lateral end surfaces (14, 15, 26) of the washbasin (2) are machined such that they terminate flush with the outer surfaces (17) of the side walls (7, 8) and of the front wall (6), and **in that** a veneer (9) applied to the outer surfaces (17) is applied to the end surfaces (14, 15, 26) of the washbasin (2) via an adhesive-bonding connection (21) and extends as far as the right-angled upper edge (18) of the washbasin (2).

2. Sanitary installation according to Claim 1, **characterized in that** the mutually facing and abutting peripheral surfaces (16) of the washbasin (2) and the end surfaces (13) of the front wall (6) and side walls (7, 8) butt against one another in a form-fitting manner.

3. Sanitary installation according to Claim 2, **characterized in that** the planar-end underside (16) of the washbasin (2) rests in planar fashion on the respective end surface (13).

4. Sanitary installation according to Claim 2, **characterized in that** the underside of the washbasin (2) has formed in it a groove (22), in which the respective wall (6, 7, 8) engages.

5. Sanitary installation according to Claim 2, **characterized in that** the peripheral surfaces (16) of the washbasin (2) and the end surfaces (13) of the respective walls (6, 7, 8) butt against one another via a mitre joint.

6. Sanitary installation according to Claim 4 or 5, **characterized in that** the leg (23) of the groove (22), said leg ending in the end surface (14, 15, 26), or the end surface (14, 15, 26), which adjoins the mitre joint of the washbasin (2), has a height of ≤ 10 mm, in particular ≤ 5 mm and preferably of approximately 2 mm.

7. Sanitary installation according to one of the preceding claims, **characterized in that** the adhesive forming the adhesive-bonding connection (21) is an epoxy resin adhesive or a polyurethane adhesive.

8. Sanitary installation according to one of the preceding claims, **characterized in that** the veneer (9) is a real-wood veneer, a decorative veneer or a laminate veneer.

9. Method of producing a sanitary installation according to one of the preceding claims, **characterized in that** the side walls (7, 8) and the front wall (6) have provided on them a veneer portion (24, 25, 28), which projects beyond the respective end surface (13), whereupon the end surfaces (14, 15, 26) of the washbasin (2) are machined in dependence on the distance (d₁, d₂) of the veneer portions (24, 25, 28) from one another or from the rear side of the furniture unit, whereupon an adhesive layer (21) is applied to the inside of the veneer portions (24, 25, 28) and/or to the end surfaces (14, 15, 26) of the washbasin (2), and whereupon the washbasin (2) is placed in position on the substructure furniture unit (5), and therefore the veneer portions (24, 25, 28) are located opposite the end surfaces (14, 15, 26) of the washbasin (2) and are adhesively bonded thereto via the adhesive layer (21).

10. Method according to Claim 9, **characterized in that**, for the purpose of forming the veneer portions (24, 25, 28), the respective wall (6, 7, 8) of the substructure furniture unit (5) is machined, in particular by milling, on the respective end surface (13), and this therefore exposes the veneer portion (24, 25, 28).

11. Method according to Claim 9 or 10, **characterized in that**, once the washbasin (2) has been inserted and the veneer portions (24, 25, 28) have been adhesively bonded, a projection of the veneer portions (24, 25, 28) beyond the upper edge (18) of the washbasin (2) is cut off.

12. Method according to one of Claims 9-11, **characterized in that** the washbasin (2) has formed in its underside a peripheral groove (22), into which the respective wall (6, 7, 8) is inserted.

13. Method according to one of Claims 9-11, **characterized in that** the underside of the washbasin (2) is plain-milled.

14. Method according to one of Claims 9 to 11, **characterized in that** the washbasin (2) and the respective wall (6, 7, 8) have formed on them a mitred surface, via which the two butt against one another.

15. Method according to one of Claims 9 to 14, **characterized in that** the adhesive used for forming the adhesive-bonding connection (21) is an epoxy resin adhesive or a polyurethane adhesive.

## Revendications

1. Appareil sanitaire comprenant un lavabo (2) en céramique ou porcelaine et un meuble sous lavabo (5) qui supporte le lavabo et qui présente deux parois latérales (7, 8) et une paroi avant (6), sur les surfaces frontales supérieures desquelles le lavabo repose au niveau des bords, **caractérisé en ce que** les surfaces frontales du côté avant et latérale (14, 15, 26) du lavabo (2) sont traitées de telle sorte qu'elles se terminent en affleurement avec les surfaces extérieures (17) des parois latérales (7, 8) et de la paroi avant (6), et **en ce qu'**un plaquage (9) appliqué sur les surfaces extérieures (17) est appliqué par le biais d'une liaison adhésive (21) sur les surfaces frontales (14, 15, 26) du lavabo (2) et s'étend jusqu'au bord supérieur à angle droit (18) du lavabo (2).

2. Appareil sanitaire selon la revendication 1, **caractérisé en ce que** les surfaces de bord tournées l'une vers l'autre et situées l'une audessus de l'autre (16) du lavabo (2) et les surfaces frontales (13) des parois avant et latérales (6, 7, 8) s'appliquent les unes contre les autres par engagement par correspondance de formes.

3. Appareil sanitaire selon la revendication 2, **caractérisé en ce que** le côté inférieur se terminant sous forme plane (16) du lavabo (2) s'applique à plat sur la surface frontale respective (13).

4. Appareil sanitaire selon la revendication 2, **caractérisé en ce qu'**une rainure (22) est réalisée au niveau du côté inférieur du lavabo (2), dans laquelle s'engage la paroi respective (6, 7, 8).

5. Appareil sanitaire selon la revendication 2, **caractérisé en ce que** les surfaces de bord (16) du lavabo (2) et les surfaces frontales (13) des parois respectives (6, 7, 8) s'appliquent l'une contre l'autre par le biais d'un onglet.

6. Appareil sanitaire selon la revendication 4 ou 5, **caractérisé en ce que** la branche (23) de la rainure (22) se terminant dans la surface frontale (14, 15, 26) ou la surface frontale (14, 15, 26) se raccordant à l'onglet du lavabo (2) présente une hauteur ≤ 10 mm, en particulier ≤ 5 mm, de préférence d'environ 2 mm.

7. Appareil sanitaire selon l'une quelconque des revendications précédentes, **caractérisé en ce que** l'adhésif formant la liaison adhésive (21) est un adhésif à base de résine époxy ou un adhésif à base de polyuréthane.

8. Appareil sanitaire selon l'une quelconque des revendications précédentes, **caractérisé en ce que** le plaquage (9) est un plaquage en bois véritable, un plaquage décoratif ou un plaquage en stratifié.

9. Procédé de fabrication d'un appareil sanitaire selon l'une quelconque des revendications précédentes, **caractérisé en ce qu'**au niveau des parois latérales (7, 8) et de la paroi avant (6) est prévue une portion de plaquage (24, 25, 28) faisant saillie au-delà de la surface frontale respective (13), les surfaces frontales (14, 15, 26) du lavabo (2) étant traitées en fonction de la distance (d₁, d₂) des portions de plaquage (24, 25, 28) l'une à l'autre ou au côté arrière du meuble, une couche d'adhésif (21) étant appliquée sur le côté intérieur des portions de plaquage (24 25, 28) et/ou sur les surfaces frontales (14, 15, 26) du lavabo (2), le lavabo (2) étant posé sur le meuble sous lavabo (5) de telle sorte que les portions de plaquage (24, 25, 28) s'appliquent en face des surfaces frontales (14, 15, 26) du lavabo (2) et soient collées à celles-ci par le biais de la couche d'adhésif (21).

10. Procédé selon la revendication 9, **caractérisé en ce que** pour réaliser les portions de plaquage (24, 25, 28), la paroi respective (6, 7, 8) du meuble sous lavabo (5) est traitée au niveau de la surface frontale respective (13) par enlèvement de matière, notamment par fraisage, de sorte que la portion de plaquage (24, 25, 28) soit exposée.

11. Procédé selon la revendication 9 ou 10, **caractérisé en ce qu'**après l'insertion du lavabo (2) et le collage des portions de plaquage (24, 25, 28), un dépassement des portions de plaquage (24, 25, 28) au-delà du bord supérieur (18) du lavabo (2) est coupé.

12. Procédé selon l'une quelconque des revendications 9 à 11, **caractérisé en ce qu'**une rainure du côté du bord (22) est réalisée du côté inférieur du lavabo (2), dans laquelle est insérée la paroi respective (6, 7, 8).

13. Procédé selon l'une quelconque des revendications 9 à 11, **caractérisé en ce que** le côté inférieur du lavabo (2) est soumis à un surfaçage.

14. Procédé selon l'une quelconque des revendications 9 à 11, **caractérisé en ce qu'**une surface d'onglet est réalisée au niveau du lavabo (2) et de la paroi respective (6, 7, 8) par le biais de laquelle ces deux éléments s'appliquent l'un contre l'autre.

15. Procédé selon l'une quelconque des revendications 9 à 14, **caractérisé en ce que** l'on utilise comme adhésif formant la liaison adhésive (21) un adhésif à base de résine époxy ou un adhésif à base de polyuréthane.
